# DEMANDE DE BREVET EUROPEEN

(11) **EP 0 654 562 A1**
(43) Date de publication de la demande: **24.05.1995**
(21) Numéro de dépôt: 94402636.8
(22) Date de dépôt: 18.11.1994
(51) Int. Cl.: E01D 19/16

(54) **Perfectionnements aux procédés et dispositifs pour mettre en place des gaines discontinues sur des câbles et aux câbles ainsi gainés**

(30) Priorité: 22.11.1993 FR 9313941
(71) Demandeur: FREYSSINET INTERNATIONAL ET CIE, F-78140 Velizy Villacoublay (FR)
(72) Inventeur: Stubler, Jérôme, F-75007 Paris (FR); Ladret, Patrick, c/o Freyssinet Intern. et Cie, F-78140 Velizy (FR); Dupuis, Joel, F-78690 Les Essarts le Roi (FR)
(74) Mandataire: Loisel, Bertrand

(57) **Abrégé**

Il s'agit d'un hauban de pont constitué par un câble (1) lui-même enveloppé par une gaine discontinue composée de tronçons tubulaires successifs identiques (4) à extrémités mutuellement emboîtées (en 9). Ce hauban comprend une câblette inextensible (10) tendue le long du câble, à l'intérieur des tronçons de gaine successifs, câblette solidarisée avec une pluralité d'attaches équidistantes (11) en nombre égal à celui desdits tronçons de gaine, chaque attache étant fixée à un tronçon de gaine en un point de ce tronçon et la distance (D) entre deux attaches successives quelconques solidarisées avec la câblette étant égale à la distance entre deux points identiques de deux tronçons de gaine successifs, distance qui est légèrement inférieure à la longueur minimale envisageable pour chaque tronçon.

## Description

L'invention est relative aux procédés et dispositifs pour mettre en place sur des câbles des gaines discontinues, c'est-à-dire composées de tronçons tubulaires identiques se succédant axialement, ainsi qu'aux câbles gainés obtenus.

Elle vise plus particulièrement le cas où les câbles en question sont les âmes de haubans obliques et sont composés chacun d'une pluralité de torons ou brins eux-mêmes constitués individuellement par des fils métalliques ou par des ensembles de fils métalliques parallèles ou torsadés, lesdits haubans servant notamment à équiper les ponts haubanés en reliant les pylônes de ces ponts à leur tablier.

L'invention vise plus particulièrement encore, mais non exclusivement, le cas où, pour réduire la prise au vent de chaque hauban, sa gaine présente un contour extérieur cylindrique de section circulaire, ainsi qu'il a été décrit dans le brevet FR-A-90 04180.

Le coefficient de dilatation thermique des gaines considérées est généralement différent de celui des câbles entourés par ces gaines : dans le cas préféré où la gaine est constituée en une matière plastique (telle que le polypropylène ou le polyéthylène à haute densité), la différence entre ces deux coefficients est considérable, celui de la gaine étant beaucoup plus élevé que celui du câble.

Pour rendre possibles les déformations thermiques des différents tronçons de gaine le long du câble oblique qu'ils entourent, il a été proposé de prévoir un recouvrement mutuel des extrémités contiguës de ces tronçons, l'extrémité inférieure de chaque tronçon étant à cet effet élargie en forme de cloche ou tulipe de façon à entourer l'extrémité contiguë supérieure du tronçon immédiatement inférieur, ce qui rend possibles les coulissements mutuels de ces deux extrémités.

Il convient d'éviter que les coulissements mutuels en question se produisent irrégulièrement le long du hauban et se traduisent par un déboîtement total de certaines extrémités de tronçons en dehors des extrémités adjacentes, et par conséquent à une exposition directe à l'air libre des portions alors dégarnies du hauban.

De tels coulissements irréguliers sont inévitables si les tronçons de gaine ne sont pas accrochés individuellement au câble en leurs positions de montage initial : c'est ainsi que, dans cette hypothèse d'absence d'accrochage individuel, le poids de chaque tronçon dû à l'obliquité du câble tend à le faire descendre, avec coulissement de son extrémité épanouie inférieure contre l'extrémité supérieure chevauchée du tronçon inférieur, et ce, jusqu'à butée du fond de ladite extrémité épanouie contre la tranche de ladite extrémité chevauchée.

Les déboîtements résultant de tels coulissements incontrôlés présentent plusieurs inconvénients et en particulier les suivants :
- les portions dégarnies du hauban offrent une forte prise au vent,
- les discontinuités qui en résultent sont déplaisantes à l'oeil, en particulier du fait que les torons constitutifs du câble sont généralement revêtus d'enveloppes noires et que les tronçons de gaine extérieure sont au contraire généralement de couleur claire (grise ou blanche),
- les déplacements et déformations cumulés des différents tronçons de gaine, combinés avec l'attraction de le pesanteur, peuvent entraîner par grand froid un rassemblement de ces tronçons en des positions relativement basses, ce qui nécessite, lors des dilatations subséquentes desdits tronçons dues à leur réchauffement consécutif, des coulissements de relativement grande amplitude des tronçons supérieurs le long du câble, coulissements qui peuvent entraîner des blocages et même des ruptures locales, ou tout au moins des usures par frottement.

Pour remédier à ces inconvénients, il a déjà été proposé de solidariser localement un point de chaque tronçon de gaine avec le câble à la fin de sa première mise en place sur celui-ci.

Dans les modes de réalisation qui ont été proposés jusqu'à ce jour pour assurer une telle fixation locale, cette dernière est effectuée directement sur place, en particulier par mise en place d'un collier métallique autour de la portion d'extrémité supérieure, de chaque tronçon de gaine, qui est recouverte par la portion évasée inférieure du tronçon immédiatement supérieur, ledit collier étant serré pour assurer la solidarisation souhaitée.

Une telle opération est délicate et coûteuse du fait qu'elle doit être effectuée sur place, sur le câble oblique déjà tendu, en particulier lorsque la longueur du câble considéré est grande et dépasse la centaine de mètres.

L'invention a pour but, surtout, de simplifier considérablement cette fixation locale de chaque tronçon de gaine sur le câble en rendant inutile toute intervention sur place après l'amenée des différents tronçons en leur position définitive sur le câble.

A cet effet, les câbles gainés du genre en question selon l'invention sont essentiellement caractérisés en ce qu'ils comprennent une câblette inextensible tendue le long du câble, à l'intérieur des tronçons de gaine successifs, câblette solidarisée avec une pluralité d'attaches équidistantes en nombre égal à celui desdits tronçons de gaine, chaque attache étant fixée à un tronçon de gaine en un point de ce tronçon et la distance entre deux attaches successives quelconques solidarisées avec la câblette étant égale à la distance entre deux points identiques de deux tronçons de gaine successifs, distance qui est légèrement inférieure à la longueur minimale envisageable pour chaque tronçon.

Il en résulte que les emplacements relatifs des points de fixation des différentes attaches sur les différents tronçons de gaine sont identiques.

Dans des modes de réalisation préférés, on a recours en outre à l'une et/ou à l'autre des dispositions suivantes :
- chaque attache comprend des premiers moyens d'attache solidarisés en permanence avec la câblette et des seconds moyens d'attache propres à coopérer de façon amovible avec les premiers et avec une portion, de préférence aménagée à cet effet, d'un tronçon de gaine, de façon à lier ces premiers moyens à ce tronçon,
- dans un câble gainé selon l'alinéa précédent, les premiers moyens d'attache comprennent une embase solidaire de la câblette, un tourillon faisant saillie sur cette embase et une palette allongée montée rotative à l'extrémité de ce tourillon et les seconds moyens d'attache comprennent une boutonnière évidée longitudinalement dans le tronçon de gaine, ladite boutonnière étant dimensionnée de manière à pouvoir laisser passer la palette lorsque celle-ci est orientée longitudinalement et non pas lorsqu'elle est orientée transversalement,
- dans un câble gainé selon l'alinéa qui précède le précédent, les premiers moyens d'attache comprennent une embase solidarisée avec la câblette et un pion faisant saillie radialement sur cette embase et lui-même percé près de son extrémité libre par un alésage transversal, et les seconds moyens d'attache comprennent un trou évidé dans le tronçon de gaine et une goupille propre à coopérer avec l'alésage du pion, à l'extérieur du tronçon de gaine,
- l'attache est constituée par un cavalier en forme de U propre à chevaucher la câblette, les deux pieds de ce cavalier étant propres à traverser deux trous évidés dans le tronçon de gaine et à être coiffés, extérieurement à ce tronçon, par deux écrous de serrage.

Pour ce qui est des procédés de mise en place des gaines discontinues sur des câbles obliques tendus, ils sont essentiellement caractérisés selon l'invention par la suite des opérations suivantes :
- on a recours à une câblette inextensible au moins aussi longue que le câble,
- on place successivement autour de cette câblette et de la base du câble chacun des tronçons destinés à constituer la gaine,
- on fixe localement un point donné de chaque tronçon à ladite câblette, les emplacements relatifs des points de fixation des différents tronçons sur la câblette étant identiques, et la distance entre les points de fixation qui se succèdent sur la câblette étant légèrement inférieure à la longueur minimum envisageable pour chaque tronçon,
- puis on tend la câblette le long du câble en exerçant une traction sur son extrémité supérieure de façon telle qu'à la fin de cette traction les différents tronçons de gaine se succèdent régulièrement le long du câble avec recouvrements mutuels.

L'invention vise également les éléments spéciaux (câblettes, attaches...) mis en oeuvre pour obtenir les câbles gainés en question.

Elle comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre en coupe axiale schématique partielle un hauban gainé conformément à l'invention.

La figure 2 montre à plus grande échelle une section transversale de ce hauban selon II-II, figure 1.

Les figures 3 et 4 montrent à encore plus grande échelle une attache comprise par ledit hauban, respectivement selon III-III, figure 4, et selon la flèche IV de la figure 3.

Les figures 5 et 6 montrent schématiquement deux variantes d'une telle attache.

On dispose d'un câble 1 composé d'un faisceau de torons 2 juxtaposés latéralement, chacun de ces torons 2 étant lui-même constitué de préférence par un ensemble de fils métalliques torsadés contenus dans une enveloppe en matière plastique avec interposition d'un produit de protection approprié.

Ce câble est monté et tendu obliquement entre un point haut d'un pylône de pont et le tablier de ce pont, aux fins de support de ce tablier.

En cet état, la surface latérale extérieure du câble présente des irrégularités offrant une forte prise au vent.

Pour réduire cette prise au vent, on enveloppe le câble 1 d'une gaine ou coquille 3 présentant une surface latérale cylindrique lisse et de révolution.

A cet effet, et comme explicité dans le brevet FRANCE ci-dessus mentionné, on a recours à une suite de tronçons 4 composés chacun de deux demi-coquilles 5,6 en une matière légèrement déformable dont les bords longitudinaux sont assemblés deux à deux.

Dans le mode de réalisation préféré illustré, cet assemblage est obtenu par clipsage mutuel de l'un des bords, présentant un rabat 7 replié vers l'axe du câble, contre l'autre bord, formant une rigole 8 propre à recevoir ledit rabat.

Pour rendre possibles les déformations thermiques relatives entre les tronçons de coquille 4 et le câble 1, l'extrémité de chaque tronçon 4 destinée à être disposée en bas de ce tronçon en fin de montage est épanouie selon une cloche cylindrique 9 propre à chevaucher à coulissement doux ou avec un léger jeu radial l'extrémité supérieure du tronçon immédiatement inférieur.

Pour maîtriser et régulariser tout au long du câble les déformations thermiques individuelles des différents tronçons de coquille -afin d'écarter les inconvénients explicités ci-dessus-, il convient de fixer un point de chaque tronçon à la portion de câble que ce tronçon entoure, et ce de façon que l'on observe en permanence, et même par grand froid, des recouvrements mutuels des extrémités de tronçons contiguës.

A cet effet, on a recours ici à un lien souple et inextensible 10, qui est désigné par le mot "câblette" dans le présent exposé.

Cette câblette, qui est par exemple constituée par un faisceau de fils en acier inoxydable ou en un matériau protégé contre la corrosion, dont le diamètre global est de l'ordre de quelques millimètres, présente une longueur au moins égale à celle du câble.

Elle est destinée à être tendue le long du câble, à l'intérieur de sa gaine discontinue.

En cet état tendu, ladite câblette 10 peut être considérée comme solidarisée avec le câble 1 lui-même.

C'est sur elle que sont effectuées les fixations locales des différents tronçons de coquilles 4.

Du fait de la solidarisation observée ci-dessus, ces fixations peuvent être considérées comme effectuées sur le câble lui-même.

Le très grand avantage de cette disposition réside en ce que les fixations locales considérées peuvent être effectuées à tour de rôle sur les différents tronçons, à la base du câble, avant mise en place définitive de la câblette, cette dernière n'étant mise en place que progressivement le long du câble, par exercice d'une traction sur son extrémité supérieure, au fur et à mesure de l'évolution des accrochages successifs des différents tronçons sur elle.

En d'autres termes, il est inutile d'aller effectuer lesdites fixations locales sur place, le long du câble oblique déjà tendu, ce qui exige des interventions particulièrement délicates, longues et coûteuses, et en particulier la prévision d'une installation du genre des téléphériques à nacelles.

Il est à noter également que la traction exercée sur la câblette 10 pour la mettre en place le long du câble 1 sert par elle-même à hisser chacun des tronçons de gaine jusqu'à sa position définitive autour du câble.

Les fixations locales des différents tronçons sur la câblette peuvent être réalisées de toute manière désirable.

Dans ce qui suit, on donne quelques exemples de telles fixations à titre bien entendu purement illustratif et aucunement limitatif de l'invention.

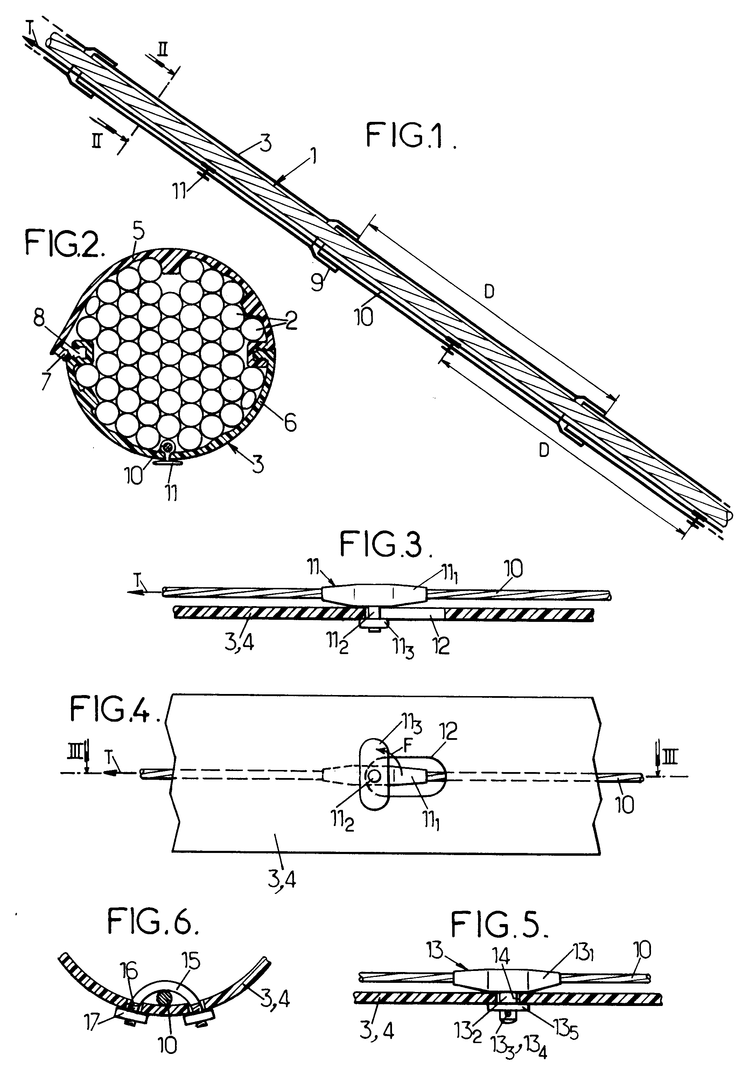

Dans le premier mode de réalisation représenté sur les figures 1 à 4, la câblette 10 est solidarisée avec une pluralité d'attaches 11 du type de certains "boutons de manchette", propres à coopérer avec des boutonnières allongées 12 évidées longitudinalement dans les différents tronçons de coquille 4.

Chaque attache 11 comprend :
- une embase 11₁ solidarisée, notamment par soudure, avec la câblette 10,
- un tourillon 11₂ faisant saillie radialement sur l'embase 11₁,
- et une palette allongée 11₃ montée de façon pivotante à l'extrémité du tourillon 11₂, palette dont les dimensions sont choisies de façon telle qu'elle puisse traverser la boutonnière 12 lorsqu'elle est orientée longitudinalement, c'est-à-dire parallèlement à la câblette, et qu'au contraire cette traversée ne soit pas possible lorsque ladite palette est orientée transversalement.

L'accrochage d'une telle attache sur un tronçon de coquille 4 se fait très simplement en orientant la palette 11₃ parallèlement à la câblette 10, en introduisant alors cette palette dans la boutonnière 12 du tronçon 4 et faisant enfin tourner ladite palette de 90° (selon la flèche F de la figure 4), ce qui verrouille l'accrochage.

Toutes les boutonnières 12 sont évidées dans des régions identiques des différents tronçons 4, par exemple au milieu de l'étendue axiale de chaque tronçon.

Il est à noter en outre que, après mise sous tension de la câblette 10 par exercice d'une traction T sur son extrémité supérieure, chaque tourillon 11₂ vient buter contre l'extrémité supérieure de la boutonnière associée 12.

Il en résulte que les points correspondant aux fixations locales de la câblette sur les différents tronçons sont disposés en des emplacements identiques de ces tronçons.

Dans ces conditions, la distance D (figure 1) qui sépare les attaches 11 successives sur la câblette 10 est égale à la distance qui sépare les uns des autres les points identiques des différents tronçons successifs, par exemple les tranches de leurs portions inférieures évasées en tulipe.

On donne à ladite distance D une valeur qui est légèrement inférieure à la plus petite longueur envisageable pour chaque tronçon de coquille 4, par très grand froid, longueur qui est en général de l'ordre de 2 mètres.

Dans ces conditions, et l'égalité ci-dessus étant respectée en permanence, on est sûr :
- d'une part, que les déformations thermiques relatives des différents tronçons par rapport au câble se manifestent d'une façon régulière tout le long de la gaine discontinue formée par ces tronçons, avec des recouvrements mutuels identiques des extrémités adjacentes desdits tronçons,
- et, d'autre part, que ces recouvrements ne sont jamais annulés.

Dans la variante de la figure 5, chaque attache 13 comprend :
- d'une part, une embase 13₁ fixée sur la câblette 10, par exemple par soudage, ladite embase étant prolongée radialement par un pion 13₂ lui-même évidé à proximité de sa tête par un alésage transversal 13₃,
- et, d'autre part, une goupille 13₄ propre à être introduite aux fins de verrouillage dans l'alésage 13₃ après que la tête du pion ait traversé un orifice 14 évidé dans le tronçon de gaine 4 concerné.

La fixation de ce tronçon sur la câblette 10 fait alors intervenir la succession des opérations suivantes :
- introduction du pion 13₂ dans l'orifice 14,
- puis introduction de la goupille 13₄ dans l'alésage 13₃ du pion, alors disposé à l'extérieur dudit tronçon 4.

Pour améliorer la répartition de la pression de la goupille 13₄ sur la face extérieure du tronçon 4, on interpose avantageusement en outre, entre cette goupille et cette face extérieure, une rondelle 13₅ entourant le pion 13₂.

Dans la variante de la figure 6, aucune embase n'est rapportée à l'avance sur la câblette 10.

La fixation de cette câblette sur chaque tronçon de gaine 4 est effectuée à l'aide de cavaliers 15 chevauchant la câblette, les deux pieds de chaque cavalier étant filetés à leurs extrémités et chacune de ces extrémités filetées coopérant, après traversée de trous appropriés 16 évidés dans le tronçon 4, avec des écrous de serrage extérieurs 17.

Cette variante est avantageuse en ce qu'elle dispense de rapporter à l'avance sur la câblette 10 des moyens d'attache équidistants spéciaux, mais elle rend nécessaire une mesure précise des écartements E entre les portions sucessives, de la câblette 10, qui sont chevauchées par leurs cavaliers 15, ces écartements E devant tous être rendus égaux à la distance D ci-dessus définie.

En suite de quoi, et quel que soit le mode de réalisation adopté, on obtient un câble enveloppé par une gaine discontinue constituée par une pluralité de tronçons tubulaires successifs, emboîtés mutellement de proche en proche, câble dont la constitution, le montage et les avantages (notamment l'absence de risque de tout déboîtement local des tronçons mutuellement emboîtés, la suppression de toute intervention sur place, c'est-à-dire sur le câble tendu lui-même en d'autres emplacements que la base de ce câble, et la facile amovibilité du montage des tronçons) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le verrouillage à goupille 13₅ illustré sur la figure 5 serait remplacé par un autre verrouillage amovible mettant en oeuvre une rondelle élastique en C de type "circlips" coopérant avec une gorge circulaire évidée dans le pion 13₂ juste au ras de la face extérieure du tronçon de gaine concerné 4.

## Revendications

1. Câble enveloppé par une gaine discontinue composée de tronçons tubulaires successifs identiques (4) à extrémités mutuellement emboîtées (en 9), caractérisé en ce qu'il comprend une câblette inextensible (10) tendue le long du câble, à l'intérieur des tronçons de gaine successifs (4), câblette solidarisée avec une pluralité d'attaches équidistantes (11-12 ; 13-14 ; 15-17) en nombre égal à celui desdits tronçons de gaine, chaque attache étant fixée à un tronçon de gaine en un point de ce tronçon et la distance (D) entre deux attaches successives quelconques solidarisées avec la câblette étant égale à la distance entre deux points identiques de deux tronçons de gaine successifs, distance qui est légèrement inférieure à la longueur minimale envisageable pour chaque tronçon.

2. Câble gainé selon la revendication 1, caractérisé en ce que chaque attache (11-12 ; 13-14) comprend des premiers moyens d'attache solidarisés en permanence avec la câblette (10) et des seconds moyens d'attache propres à coopérer de façon amovible avec les premiers et avec une portion, de préférence aménagée à cet effet, d'un tronçon de gaine (4), de façon à lier ces premiers moyens à ce tronçon.

3. Câble gainé selon la revendication 2, caractérisé en ce que les premiers moyens d'attache comprennent une embase (11₁) solidaire de la câblette, un tourillon (11₂) faisant saillie sur cette embase et une palette allongée (11₃) montée rotative à l'extrémité de ce tourillon et en ce que les seconds moyens d'attache comprennent une boutonnière (12) évidée longitudinalement dans le tronçon de gaine (4), ladite boutonnière étant dimensionnée de manière à pouvoir laisser passer la palette (11₃) lorsque celle-ci est orientée longitudinalement et non pas lorsqu'elle est orientée transversalement.

4. Câble gainé selon la revendication 2, caractérisé en ce que les premiers moyens d'attache comprennent une embase (13₁) solidarisée avec la câblette (10) et un pion (13₂) faisant saillie radialement sur cette embase et lui-même percé près de son extrémité libre par un alésage transversal (13₃), et en ce que les seconds moyens d'attache comprennent un trou (14) évidé dans le tronçon de gaine (4) et une goupille (13₄) propre à coopérer avec l'alésage (13₃) du pion, à l'extérieur du tronçon de gaine.

5. Câble gainé selon la revendication 1, caractérisé en ce que l'attache est constituée par un cavalier (15) en forme de U propre à chevaucher la câblette (10), les deux pieds de ce cavalier étant propres à traverser deux trous (16) évidés dans le tronçon de gaine (4) et à être coiffés, extérieurement à ce tronçon, par deux écrous de serrage (17).

6. Procédé pour mettre en place sur un câble oblique tendu (1) une gaine discontinue composée de tronçons tubulaires successifs identiques (4) mutuellement emboîtés à leurs extrémités contiguës (en 9), caractérisé par la suite des opérations suivantes : on a recours à une câblette inextensible (10) au moins aussi longue que le câble, on place successivement autour de cette câblette et de la base du câble chacun des tronçons (4) destinés à constituer la gaine, on fixe localement un point donné de chaque tronçon à ladite câblette, les emplacements relatifs des points de fixation des différents tronçons sur la câblette étant identiques, et la distance (D) entre les points de fixation qui se succèdent sur la câblette étant légèrement inférieure à la longueur minimum envisageable pour chaque tronçon, puis on tend la câblette le long du câble en exerçant une traction (T) sur son extrémité supérieure de façon telle qu'à la fin de cette traction les différents tronçons de gaine se succèdent régulièrement le long du câble avec recouvrements mutuels.

7. Dispositif pour mettre en oeuvre le procédé selon la revendication 6, caractérisé en ce qu'il comporte une câblette inextensible (10) au moins aussi longue que le câble (1) et des attaches (11-12 ; 13-14 ; 15-17) pour accrocher les tronçons de gaine (4) sur la câblette, en des points, de cette câblette, qui sont équidistants d'une longueur légèrement inférieure à la longueur minimum envisageable pour chaque tronçon de gaine.
